# EUROPEAN PATENT SPECIFICATION

(11) **EP 4 049 872 B1**
(45) Date of publication and mention of the grant of the patent: **27.12.2023**
(21) Application number: 22158294.3
(22) Date of filing: 23.02.2022
(51) Int. Cl.: B60K 1/04, B60R 21/00

(54) **VEHICLE WITH PROTECTIVE STRUCTURE FOR ELECTRIC COMPONENT**
KRAFTFAHRZEUG MIT SCHUTZSTRUKTUR FÜR ELEKTRISCHE KOMPONENTE
VEHICULE AVEC STRUCTURE DE PROTECTION POUR COMPOSANT ÉLECTRIQUE

(30) Priority: 26.02.2021 JP 2021030108
(43) Date of publication of application: 31.08.2022
(73) Proprietor: Suzuki Motor Corporation, Hamamatsu-shi, Shizuoka 432-8611 (JP)
(72) Inventor: Kitahara, Yugo, Hamamatsu-shi (JP); Tsuge, Atsushi, Hamamatsu-shi (JP); Ando, Shoichiro, Hamamatsu-shi (JP)
(74) Representative: Henkel & Partner mbB

(56) References cited:
- WO-A1-2020/044717
- JP-A- 2012 176 669
- US-A1- 2014 326 524

## Description

### [Technical Field]

The present invention relates to a vehicle with a protective structure of an electric component.

### [Background Art]

Vehicle power storage apparatuses are known, each of which stores a battery pack in a case body with an opening at the bottom, installs the battery pack in a region above the opening, and thereby forms an air space region below the battery pack and prevents the battery pack from submerging (see JP 2012-176 669 A).

WO 2020/044717 A1 discloses a vehicle with a battery pack and a protective structure of the battery pack on which the preamble portion of claim 1 is based.

### [Summary of Invention]

### [Technical Problem]

When a battery pack is installed between an underfloor part (floor panel) and a front seat of a vehicle, since space in an up-down direction is limited, there is a possibility that the battery pack cannot be installed in an upper region inside the body case depending on the size of the battery pack.

In this case, when the vehicle is submerged, there is a possibility that a terminal part of the battery pack may be submerged, and the battery pack cannot be protected.

The present invention has been implemented focusing on the above-described circumstances, and an objective of the present invention is to provide a vehicle with protective structure for an electric component that can prevent, when the vehicle is submerged, the terminal part of the electric component installed on a floor panel from submerging and protect the electric component.

### [Solution to Problem]

The solution is provided by the vehicle according to the invention, the invention being defined by the subject-matter of the independent claim 1. Further possible embodiments of the invention form the subject-matter of the dependent claims.

### [Advantageous Effects of Invention]

Thus, according to the present invention, it is possible to prevent, when the vehicle is submerged, the terminal part of the electric component installed on the floor panel from submerging and protect the electric component.

### [Brief Description of Drawings]

Figure 1 is a plan view of a floor panel of a vehicle provided with a protective structure for an electric component according to an embodiment of the present invention.
Figure 2 is a diagram illustrating a cross member of the vehicle provided with the protective structure for an electric component according to the embodiment of the present invention viewed from behind.
Figure 3 is a plan view of a battery pack and surrounding floor panel of the vehicle provided with the protective structure for an electric component according to the embodiment of the present invention.
Figure 4 is a diagram illustrating the battery pack of the vehicle provided with the protective structure for an electric component according to the embodiment of the present invention viewed from the left.
Figure 5 is a plan view of a battery and the surrounding floor panel of the vehicle provided with the protective structure for an electric component according to the embodiment of the present invention.
Figure 6 is a diagram illustrating the battery of the vehicle provided with the protective structure for an electric component according to the embodiment of the present invention viewed from the left.
Figure 7 is a diagram illustrating the battery pack of the vehicle provided with the protective structure for an electric component according to the embodiment of the present invention viewed from below.
Figure 8 is a diagram illustrating the battery of the vehicle provided with the protective structure for an electric component according to the embodiment of the present invention viewed from forward.
Figure 9 is a cross-sectional view of Figure 3 viewing from a IX-IX arrow direction.
Figure 10 is a diagram illustrating the battery pack of the vehicle provided with the protective structure for an electric component according to the embodiment of the present invention viewed from forward.

### [Description of Embodiment]

A protective structure, according to an embodiment of the present invention, for an electric component including a plurality of terminal parts on a side surface thereof and installed on a floor panel of a vehicle, includes a cover member provided on the floor panel and configured to cover the electric component, wherein the cover member includes a side wall facing the side surface of the electric component, the side wall includes a bulging part bulging from a wall surface of the side wall so as to be away from the side surface of the electric component, the bulging part being located above a bottom end portion of the side wall, and each terminal part is located at the same height position as the bulging part.

Thus, the protective structure for an electric component according to the present invention can prevent, when the vehicle is submerged, the terminal part of the electric component installed on the floor panel from submerging and protect the electric component.

### [Embodiment]

Hereinafter, a protective structure for an electric component according to an embodiment of the present invention will be described with reference to the accompanying drawings.

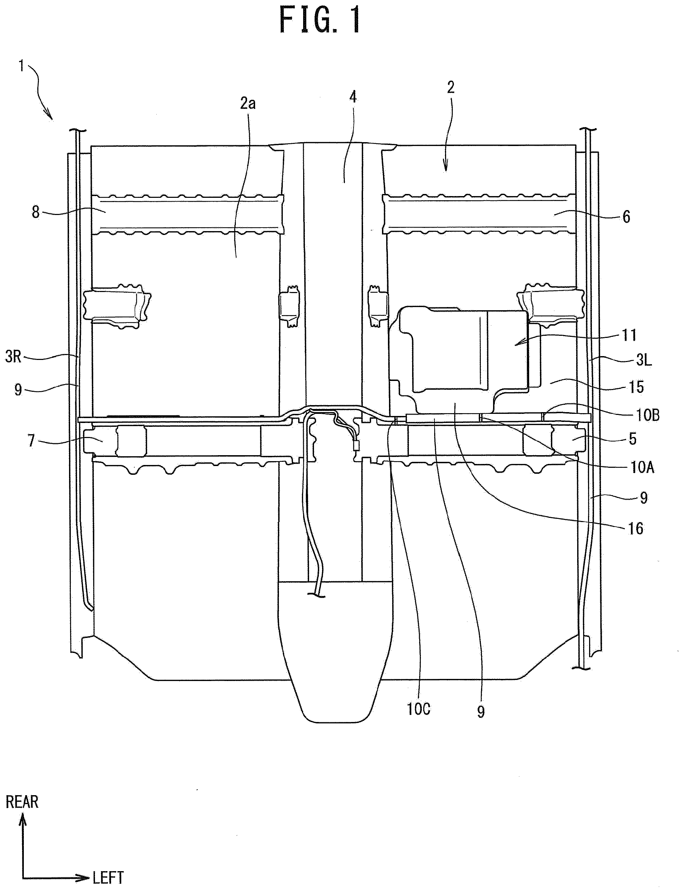

Figure 1 to Figure 10 are diagrams illustrating a protective structure for an electric component according to an embodiment of the present invention. In Figure 1 to Figure 10, up-down, front-rear and left-right directions are defined such that a front-rear direction of a vehicle on which a battery pack is mounted is the front-rear direction, a left-right direction of the vehicle (vehicle width direction) is the left-right direction and an up-down direction of the vehicle (vehicle height direction) is the up-down direction.

First, a configuration will be described.

In Figure 1, a vehicle 1 includes a floor panel 2. A left-side side sill 3L is provided at a left end portion of the floor panel 2 and the left-side side sill 3L extends in the front-rear direction along the floor panel 2. A right-side side sill 3R is provided at a right end portion of the floor panel 2 and the right-side side sill 3R extends in the front-rear direction along the floor panel 2.

A floor tunnel 4 is provided in a center portion of the floor panel 2 in a vehicle width direction and the floor tunnel 4 bulges upward from the floor panel 2.

A front-side cross member 5 and a rear-side cross member 6 are attached between the floor tunnel 4 and the left-side side sill 3L, and the front-side cross member 5 and the rear-side cross member 6 extend in the vehicle width direction spaced apart in the front-rear direction.

A front-side cross member 7 and a rear-side cross member 8 are attached between the floor tunnel 4 and the right-side side sill 3R, and the front-side cross member 7 and the rear-side cross member 8 extend in the vehicle width direction spaced apart in the front-rear direction.

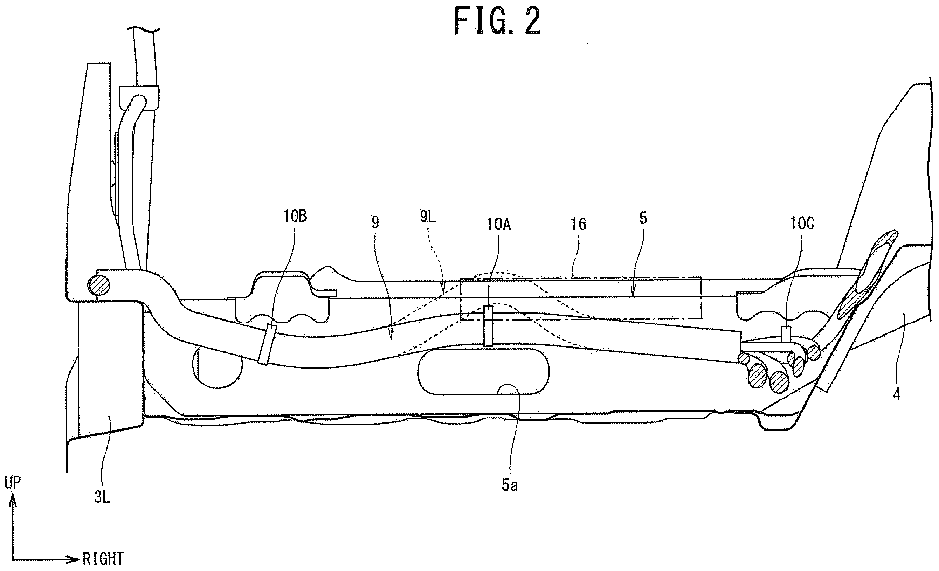

As shown in Figure 2, part of a wire harness 9 is attached to the front-side cross member 5 and the wire harness 9 extends in the vehicle width direction. More specifically, as shown in Figure 1, the wire harness 9 extends in the front-rear direction along the right-side side sill 3R, branches from a center portion in a direction in which the right-side side sill 3R extends and extends to the floor tunnel 4 along the front-side cross member 7.

The wire harness 9 extends in the vehicle width direction from the floor tunnel 4 along the front-side cross member 5 and then extends in the front-rear direction along the left-side side sill 3L. The front-side cross member 5 of the present embodiment constitutes a cross member and the wire harness 9 constitutes a first wire harness.

As shown in Figure 2, the front-side cross member 5 includes a hole 5a formed at the center portion in the vehicle width direction. The hole 5a is intended to pass a vehicle-mounted component to be installed in the front-rear direction across the front-side cross member 5. For example, a duct of an air conditioner to be installed in front of the front-side cross member 5 is passed through the hole 5a and the duct to be passed through the hole 5a extends behind the front-side cross member 5.

The front-side cross member 5 includes a band-shaped member 10A. The band-shaped member 10A is provided above the hole 5a and configured to fix the center portion of the wire harness 9 in the vehicle width direction to the front-side cross member 5.

The front-side cross member 5 includes band-shaped members 10B and 10C. The band-shaped members 10B and 10C are located below the band-shaped member 10A and at left and right end portions of the front-side cross member 5 in the vehicle width direction with respect to the band-shaped member 10A and configured to fix the left and right end portions of the wire harness 9 to the front-side cross member 5.

That is, the band-shaped member 10B is located on the left end side in the vehicle width direction with respect to the band-shaped member 10A and the band-shaped member 10C is located on the right end side in the vehicle width direction with respect to the band-shaped member 10A.

Here, the center portion of the wire harness 9 in the vehicle width direction and the left and right end portions in the vehicle width direction are based on the length of the front-side cross member 5 in the vehicle width direction, and mean the center portion of the region of the wire harness 9 routed in the vehicle width direction of the front-side cross member 5 and the left and right end portions in the vehicle width direction.

The band-shaped member 10A of the present embodiment constitutes a first mounting part, and the band-shaped members 10B and 10C constitute second mounting parts.

As shown in Figure 1, Figure 3 and Figure 4, a battery pack 11 as an electrical apparatus is installed on an upper surface 2a of the floor panel 2 and the battery pack 11 is installed in a space between an assistant driver's seat (not shown) and the floor panel 2. Note that the battery pack 11 may also be installed in a space between the driver's seat (not shown) and the floor panel 2.

Since the battery pack 11 is installed between the assistant driver's seat and the floor panel 2, the battery pack 11 can be installed in a vehicle room in a cooler environment than in an engine room, and performance of a battery 12, which will be described later, can be extracted more easily.

In addition to this, it is possible to prevent the space of a baggage compartment from being blocked by the battery pack 11, improve installation performance of the battery pack 11, and moreover eliminate the need for installing the battery pack 11 in the engine room, and thus reduce the size of the engine room.

As shown in Figure 1, in a plan view of the vehicle 1, the battery pack 11 is located among the left-side side sill 3L, the floor tunnel 4, the front-side cross member 5 and the rear-side cross member 6.

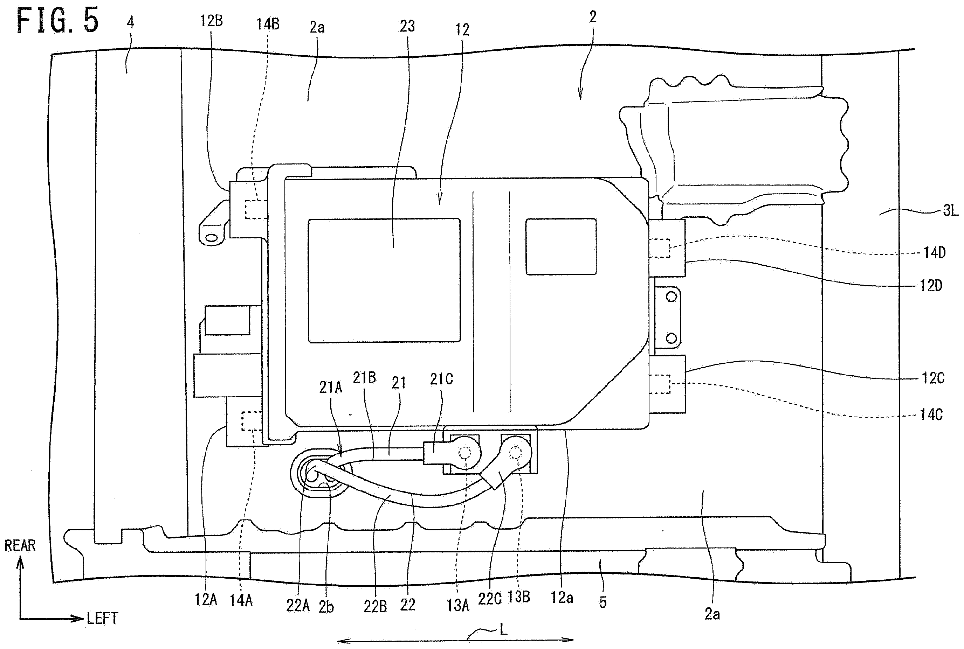

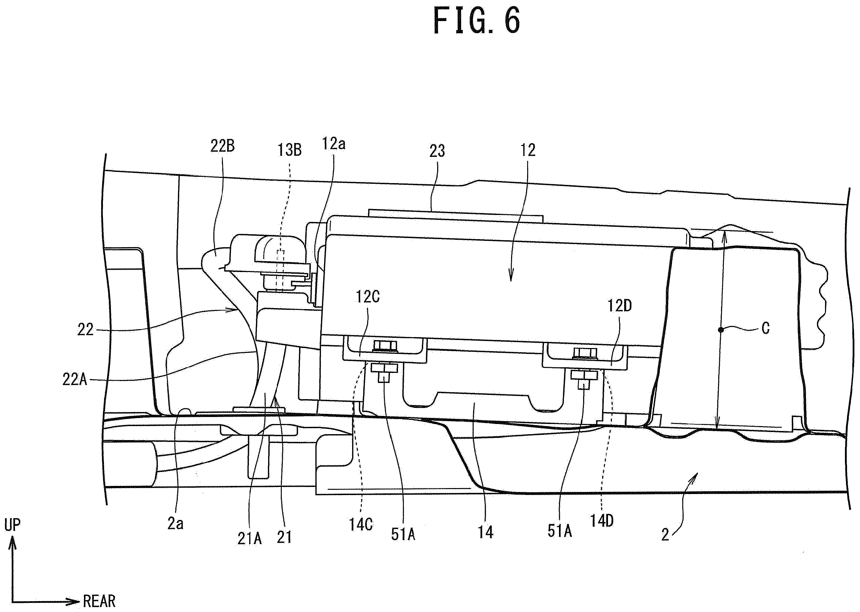

As shown in Figure 5 and Figure 6, the battery pack 11 includes the battery 12 as an electric component. The battery 12 includes a plurality of battery modules (not shown), a battery holder that accommodates the plurality of battery modules and protect the battery modules and a substrate part 23 provided on an upper surface of the battery holder.

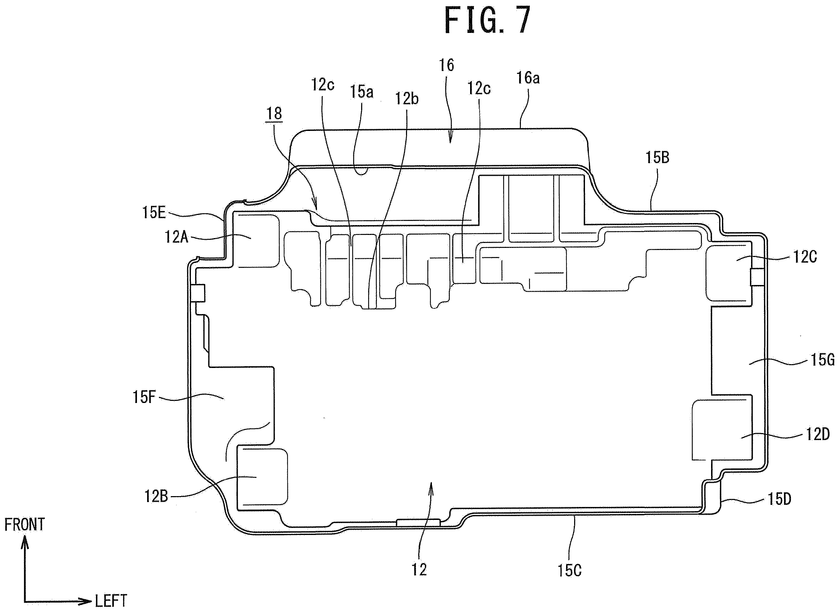

As shown in Figure 5 and Figure 7, the battery 12 is provided with a plurality of fixing pieces 12A, 12B, 12C and 12D and the fixing pieces 12A, 12B, 12C and 12D protrude outward from the side surface of the battery 12 in the vehicle width direction (outward to the left and right).

As shown in Figure 6, the floor panel 2 is provided with a bracket 14 and the bracket 14 is provided with fixing pieces 14A and 14B (see Figure 5).

The fixing pieces 14A and 14B protrude upward from the right end portion of the bracket 14 and are located at positions higher than the upper surface 2a of the floor panel 2.

The bracket 14 is provided with fixing pieces 14C and 14D (see Figure 5). The fixing pieces 14C and 14D protrude upward from a left end portion of the bracket 14 and are located at positions higher than the upper surface 2a of the floor panel 2. The fixing pieces 14A and 14B, and the fixing pieces 14C and 14D are located at the same height position.

The fixing pieces 12A and 12B of the battery 12 are fixed to the fixing pieces 14A and 14B with bolts (not shown). The fixing pieces 12C and 12D of the battery 12 are fixed to the fixing pieces 14Cand 14D with a bolt 51A. The fixing pieces 12A, 12B, 12C and 12D of the present embodiment constitute fixing parts.

Thus, the battery 12 is fixed to the floor panel 2 via the bracket 14, to be upward away from the floor panel 2 by the bracket 14. The fixing pieces 14A, 14B, 14C and 14D of the present embodiment constitute fixed parts.

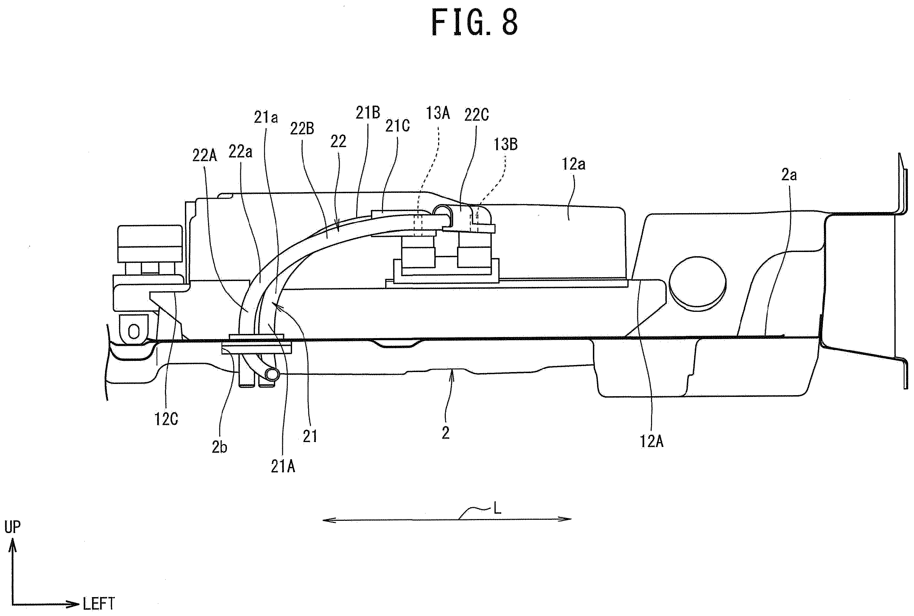

As shown with virtual lines in Figure 5 and Figure 8, terminal parts 13A and 13B are provided on an upper part of a front surface 12a of the battery 12, and the terminal parts 13A and 13B in a plan view of the vehicle 1 are installed side by side in the vehicle width direction. The vehicle width direction is a direction L in which the terminal parts 13A and 13B are arranged. Hereinafter, the arrangement direction L of the terminal parts 13A and 13B will be referred to as an arrangement direction L.

The terminal parts 13A and 13B are installed above the fixing pieces 14A, 14B, 14C and 14D, and above a center portion C of the battery 12 in the height direction (see Figure 6). Note that the wire harness 9 is omitted in Figure 5.

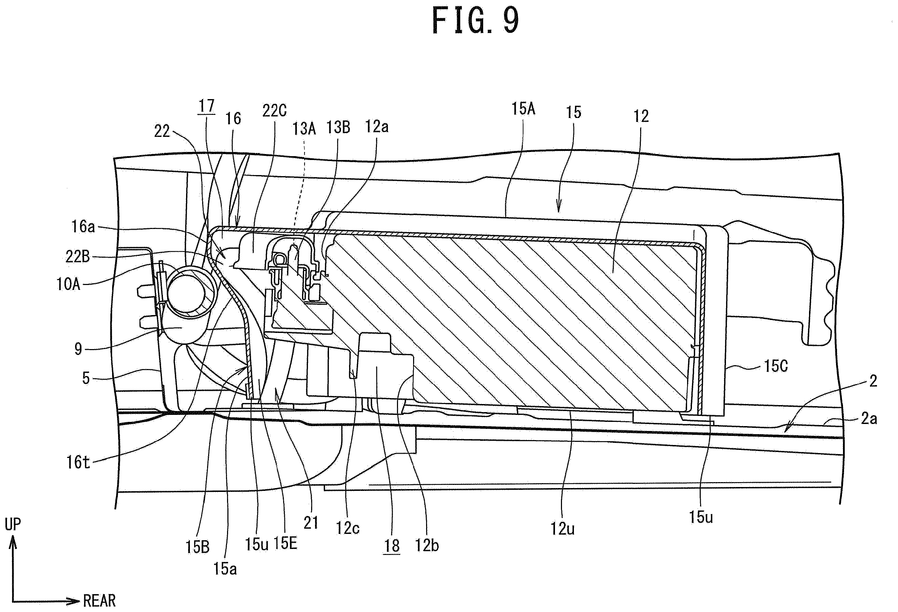

As shown in Figure 9, the terminal parts 13A and 13B are located in front of the front surface 12a of the battery 12 and extend in the up-down direction. Note that the terminal parts 13A and 13B have an identical shape and overlap in the vehicle width direction. The terminal part 13A of the present embodiment constitutes a first terminal part and the terminal part 13B constitutes a second terminal part.

As shown in Figure 6, the substrate part 23 is provided above the terminal parts 13A and 13B. The substrate part 23 is a control substrate configured to detect a remaining capacity of the battery module and control charging/discharging or the like.

As shown in Figure 5, an opening portion 2b is formed on the floor panel 2. The opening portion 2b is located on the floor tunnel 4 side with respect to the terminal parts 13A and 13B, and is aligned with the arrangement direction L of the terminal parts in a plan view of the vehicle 1.

The terminal part 13B is installed at a position farther from the opening portion 2b in the arrangement direction L of the terminal parts than the terminal part 13A.

As shown in Figure 8, wire harnesses 21 and 22 are connected to the battery pack 11. The wire harnesses 21 and 22 pass through the opening portion 2b from below the floor panel 2, extends above the floor panel 2 and in the arrangement direction L of the terminal parts, and connectors 21C and 22C provided at one end portion are connected to the terminal part 13A and the terminal part 13B respectively.

The wire harnesses 21 and 22 are routed passing through the floor tunnel 4 below the floor panel 2 and the other end portion thereof is connected to another electric component such as an auxiliary machine. Thus, electric power of the battery 12 is supplied to the other electric component such as an auxiliary machine by the wire harnesses 21 and 22. The wire harnesses 21 and 22 of the present embodiment constitute a second wire harness.

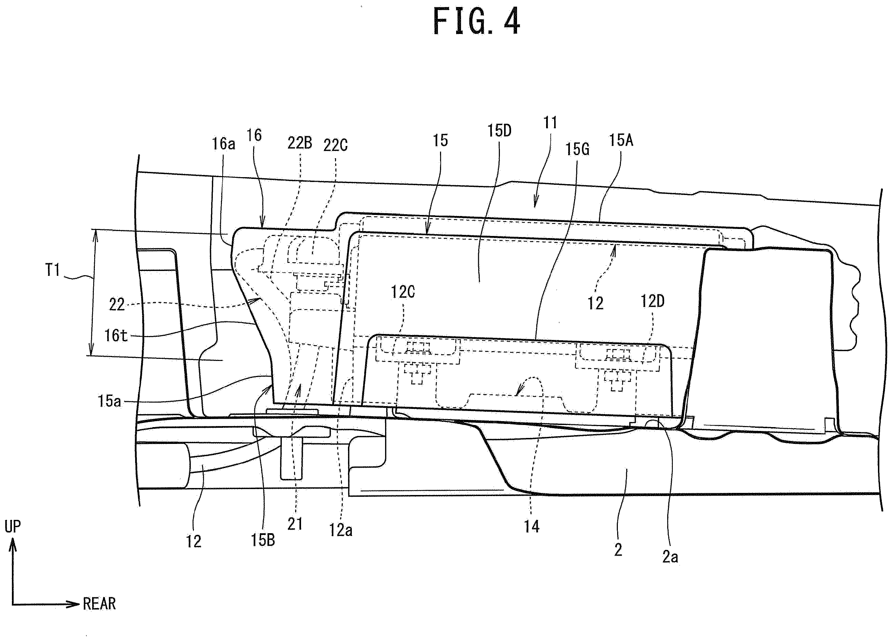

As shown in Figure 4 and Figure 9, the battery pack 11 includes a cover member 15. The cover member 15 includes a ceiling wall 15A, and a front wall 15B, a rear wall 15C, a left side wall 15D and a right side wall 15E extending downward from the ceiling wall 15A.

The ceiling wall 15A covers above the opening portion 2b, the upper surface of the battery 12 and the wire harnesses 21 and 22 from above. The front wall 15B covers the front surface 12a of the battery 12 and the wire harnesses 21 and 22, and the rear wall 15C, the left side wall 15D and the right side wall 15E cover the rear surface, the left side surface and the right side surface of the battery 12.

That is, the opening portion 2b is located inside the front wall 15B, the rear wall 15C, the left side wall 15D and the right side wall 15E, and is covered with the cover member 15. The front wall 15B, the rear wall 15C, the left side wall 15D and the right side wall 15E of the present embodiment constitute side walls.

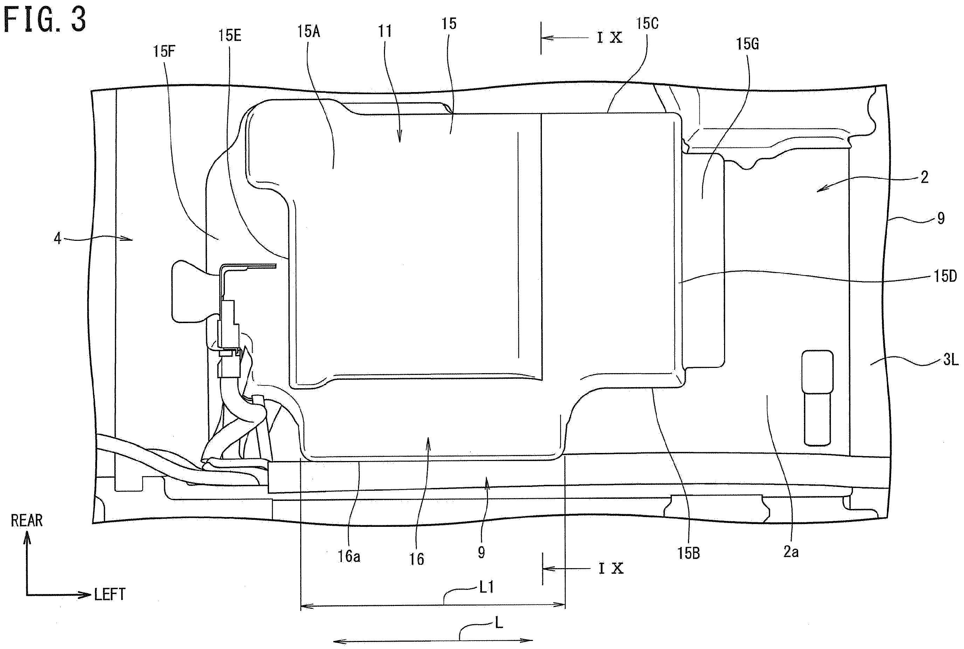

The front wall 15B of the cover member 15 faces the wire harness 9 in the front-rear direction, and the wire harness 9 is routed along the front wall 15B in the vehicle width direction (see Figure 3).

A bottom end portion 15u of the front wall 15B, the rear wall 15C, the left side wall 15D and the right side wall 15E is close to the floor panel 2 and is located at the same height position as the position of an undersurface 12u of the battery 12 (see Figure 9). The lengths (heights) of the front wall 15B, the rear wall 15C, the left side wall 15D and the right side wall 15E in the up-down direction are identical.

The front surface 12a of the battery 12 of the present embodiment constitutes a side surface of the electric component and the front wall 15B of the cover member 15 constitutes a side wall of the cover member.

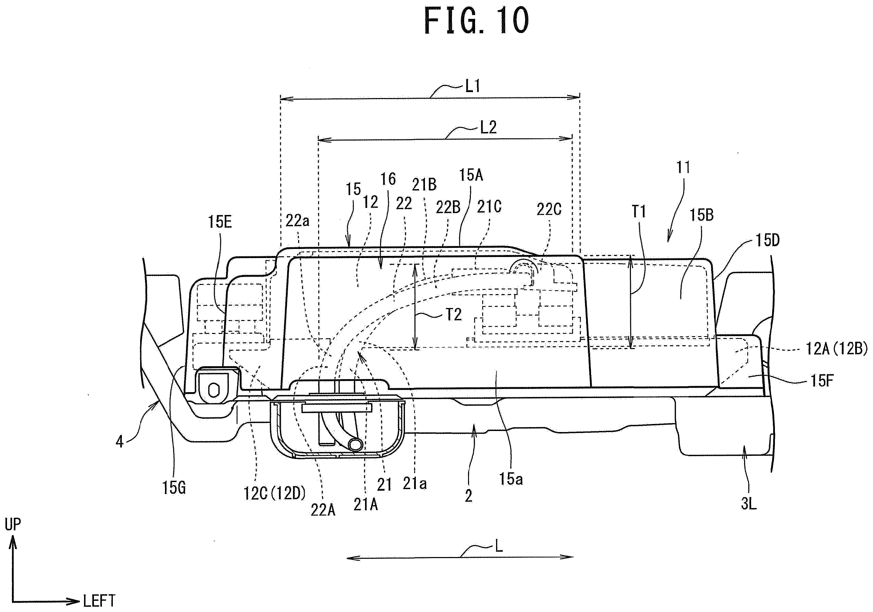

As shown in Figure 3 and Figure 7, the cover member 15 is provided with covering parts 15F and 15G. The covering part 15F protrudes outward (rightward) from the right side wall 15E of the cover member 15 and covers the fixing pieces 12A and 12B of the battery 12 from above and from the left (see Figure 7 and Figure 10).

The covering part 15G protrudes outward (leftward) from the left side wall 15D of the cover member 15 and covers the fixing pieces 12C and 12D of the battery 12 from above and from the left (see Figure 4 and Figure 7).

As shown in Figure 9, the front wall 15B of the cover member 15 facing the front surface 12a of the battery 12 in the front-rear direction is provided with a bulging part 16 (see Figure 3, Figure 4 and Figure 7).

The bulging part 16 is located above the bottom end portion 15u of the front wall 15B and bulges in a direction away from the front surface 12a of the battery 12 with respect to the wall surface 15a of the front wall 15B.

As shown in Figure 4 and Figure 9, the bulging part 16 includes an inclined part 16t. The inclined part 16t is inclined so as to be further away from the front surface 12a of the battery 12 as it extends upward from the wall surface 15a of the front wall 15B. In the bulging part 16, a distal end portion 16a in the bulging direction located above the inclined part 16t is furthest forward away from the front surface 12a of the battery 12.

The terminal parts 13A and 13B are located at the same height position as the position of the bulging part 16 and face the bulging part 16 in the front-rear direction.

The terminal parts 13A and 13B of the present embodiment are located at the same height position as the position of the distal end portion 16a in the bulging direction of the bulging part 16 which is furthest forward away from the battery 12.

As shown in Figure 9, the bulging part 16 bulges from the wall surface 15a of the front wall 15B of the cover member 15 on the wire harness 9 side and covers above the wire harness 9.

The bulging part 16 is located above the band-shaped member 10A. As shown in Figure 1, the bulging part 16 overlaps the band-shaped member 10A in a plan view of the vehicle 1. In other words, the bulging part 16 is provided alongside the band-shaped member 10A in the up-down direction.

When an impact is applied to the vehicle 1 in the vehicle width direction and the wire harness 9 deforms upward toward the floor panel 2 (see wire harness 9L in Figure 2), it is possible to cause the wire harness 9 to collide with the bulging part 16 and thereby prevent the wire harness 9 from deforming above the floor panel 2.

It is therefore possible to prevent the wire harness 9 from colliding with the assistant driver's seat above the floor panel 2 and prevent an impact on the assistant driver's seat.

Since the terminal part 13B is installed at a position farther from the opening portion 2b than the terminal part 13A in the arrangement direction L of the terminal parts, the routing length of the wire harness 22 in the cover member 15 is longer than the routing length of the wire harness 21.

As shown in Figure 9, the wire harness 22 is installed in a space portion 17 formed by the bulging part 16 inside the cover member 15 and extends in the arrangement direction L of the terminal parts along the inclined part 16t.

Inside the cover member 15, the wire harness 21 is installed closer to the front surface 12a side of the battery 12 than the wire harness 22 installed in the space portion 17 formed by the bulging part 16.

As shown in Figure 8, since the battery 12 is formed to have a longer length in the vehicle width direction (lateral direction) than a length in the up-down direction (longitudinal direction), the wire harnesses 21 and 22 are routed inside the cover member 15 so as to have a longer routing length in the arrangement direction L of the terminal parts than a routing length in the up-down direction.

More specifically, the wire harnesses 21 and 22 include lower wire harness parts 21A and 22A, and upper wire harness parts 21B and 22B respectively.

The lower wire harness parts 21A and 22A extend above the floor panel 2 from the opening portion 2b of the floor panel 2.

The upper wire harness parts 21B and 22B extend in the arrangement direction L of the terminal parts from the upper ends 21a and 22a of the lower wire harness parts 21A and 22A, and are connected to the terminal parts 13A and 13B.

In the wire harnesses 21 and 22 of the present embodiment, the upper wire harness parts 21B and 22B are routed inside the cover member 15 so as to be longer than the lower wire harness parts 21A and 22A.

As shown in Figure 10, the bulging part 16 is formed to have a length L1 in the arrangement direction L of the terminal parts (see Figure 3) longer than a routing length L2 of the wire harnesses 21 and 22 in the arrangement direction L of the terminal parts inside the cover member 15.

The bulging part 16 is formed to have a length T1 in the up-down direction longer than a length (height) T2 of the upper wire harness parts 21B and 22B in the up-down direction. The "length T2" of the upper wire harness part 21B or the upper wire harness part 22B in the up-down direction inside the cover member 15 is a length (height) from an upper end of the upper wire harness parts 21B and 22B located at the highest position to a bottom end portion of the upper wire harness part 21B or the upper wire harness part 22B located at the lowest position.

As shown in Figure 9, in a side view of the battery 12, that is, when the battery 12 is viewed from the vehicle width direction, the bulging part 16 is installed at a position that overlaps with the upper wire harness part 22B. That is, the bulging part 16 and the upper wire harness part 22B overlap each other in the front-rear direction.

Note that the lower wire harness parts 21A and 22A may be routed so as to be longer than the upper wire harness parts 21B and 22B. In this case, the bulging part 16 in the side view of the battery 12 may be installed at a position that overlaps with the lower wire harness part 22A.

As shown in Figure 9, a notch portion 12b is formed on the front surface 12a of the battery 12 and the notch portion 12b is located below the terminal parts 13A and 13B.

A space portion 18 surrounded by the notch portion 12b is formed inside the cover member 15.

As shown in Figure 7 and Figure 9, a radiation fin 12c is formed in the notch portion 12b and the radiation fin 12c is installed in the space portion 18.

Next, effects of the protective structure for the battery 12 of the present embodiment will be described.

The protective structure for the battery 12 of the present embodiment is provided on the floor panel 2, includes the cover member 15 that covers the battery 12 and the cover member 15 includes the front wall 15B facing the front surface 12a of the battery 12.

The front wall 15B includes the bulging part 16, the bulging part 16 is provided above the bottom end portion 15u of the front wall 15B and bulges in a direction away from the front surface 12a of the battery 12 with respect to the wall surface 15a of the front wall 15B. In addition to this, the terminal parts 13A and 13B are located at the same height position as the position of the bulging part 16.

Thus, when the battery 12 cannot be installed in an upper region inside the cover member 15, an air space is formed in the space portion 17 formed by the bulging part 16.

Therefore, when the battery 12 is submerged, the air space can make it difficult for water to reach the terminal parts 13A and 13B, and it is possible to prevent the terminal parts 13A and 13B from submerging and protect the battery 12.

As a result, it is possible to prevent the terminal parts 13A and 13B from getting wet and short-circuiting, and protect the terminal parts 13A and 13B, protection of which is especially necessary among parts of the battery 12.

According to the protective structure for the battery 12 of the present embodiment, the cover member 15 includes the front wall 15B, the rear wall 15C, the left side wall 15D and the right side wall 15E extending downward from the ceiling wall 15A and the ceiling wall 15A.

The bottom end portion 15u of the front wall 15B, the rear wall 15C, the left side wall 15D and the right side wall 15E extends to the vicinity of the floor panel 2, and the opening portion 2b is covered with the cover member 15.

In addition to this, the wire harnesses 21 and 22 are connected to the terminal parts 13A and 13B, and the wire harnesses 21 and 22 extend upward from below the floor panel 2 through the opening portion 2b above the floor panel 2 inside the cover member 15.

Here, if, for example, an opening portion (not shown) is provided on the left side wall 15D, the right side wall 15E or the like of the cover member 15, the wire harnesses 21 and 22 are routed through the opening portion into the cover member 15, and the wire harnesses 21 and 22 are connected to the terminal parts 13A and 13B, there may be a possibility that water may enter the cover member 15 from the opening portion of the left side wall 15D or the right side wall 15E when the battery 12 is submerged.

According to the protective structure for the battery 12 of the present embodiment, by routing the wire harnesses 21 and 22 from the opening portion 2b provided on the floor panel 2 into the cover member 15, it is possible to prevent the channel through which water enters the cover member 15 from expanding and cause the opening portion 2b to be downward away from the terminal parts 13A and 13B.

In addition to this, the space portion surrounded by the front wall 15B, the rear wall 15C, the left side wall 15D and the right side wall 15E can increase the capacity of the air space formed inside the cover member 15.

Thus, by making it further difficult for water to reach the terminal parts 13A and 13B, it is possible to more effectively prevent the terminal parts 13A and 13B from submerging and more effectively protect the battery 12.

According to the protective structure for the battery 12 of the present embodiment, the distal end portion 16a of the bulging part 16 farthest from the battery 12 in the bulging direction is located at the same height position as the positions of the terminal parts 13A and 13B to which the wire harnesses 21 and 22 are connected. In other words, the height position of the distal end portion 16a is the same as that of a portion of each terminal part 13A, 13B at which the corresponding wire harness 21, 22 is connected.

It is thereby possible to expand the region of the space portion 17 in which the connection part between the wire harnesses 21 and 22 and the terminal parts 13A and 13B is installed and expand the region of the air space in which the connection part is installed.

The space portion 17 with a large region formed by the bulging part 16 makes it difficult for water to reach the connection part between the wire harnesses 21 and 22 and the terminal parts 13A and 13B, and can thereby prevent the connection part from submerging and more effectively protect the battery 12.

According to the protective structure for the battery 12 of the present embodiment, the battery 12 includes the substrate part 23 above the terminal parts 13A and 13B and the bulging part 16 bulges so as to be further away from the battery 12 as it extends upward.

In case, the terminal parts 13A and 13B are submerged, it is possible to make it difficult for water to reach the substrate part 23 and thereby protect the substrate part 23. Thus, it is possible to prevent a fatal failure of the battery 12 and protect the battery 12.

Moreover, since the bulging part 16 bulges so as to be further away from the battery 12 as it extends upward, it is possible to expand the space portion 17 formed by the bulging part 16, further expand the region of the air space formed in the bulging part 16, make it difficult for water to reach the substrate part 23 and thereby protect the substrate part 23. In this way, by making it further difficult for water to reach the substrate part 23 and thereby it is possible to more effectively protect the substrate part 23.

According to the protective structure for the battery 12 of the present embodiment, the terminal parts 13A and 13B are installed above the center portion C of the battery 12 in the height direction.

It is thereby possible to cause the terminal parts 13A and 13B to be upward away from the floor panel 2, make it difficult for water to reach the terminal parts 13A and 13B, and more effectively prevent the terminal parts 13A and 13B from submerging.

According to the protective structure for the battery 12 of the present embodiment, the floor panel 2 is provided with the bracket 14, and the bracket 14 includes the fixing pieces 14A, 14B, 14C and 14D at positions higher than the upper surface 2a of the floor panel 2.

The battery 12 includes the fixing pieces 12A, 12B, 12C and 12D fixed to the fixing pieces 14A, 14B, 14C and 14D.

In addition to this, the cover member 15 includes the covering part 15F and 15G that cover the fixing pieces 12A, 12B, 12C and 12D, and the terminal parts 13A and 13B are provided above the fixing pieces 14A, 14B, 14C and 14D.

It is thereby possible to cause the terminal parts 13A and 13B to be upward away from the floor panel 2, make it difficult for water to reach the terminal parts 13A and 13B, and more effectively prevent the terminal parts 13A and 13B from submerging.

By providing the cover member 15 with the covering parts 15F and 15G that cover the fixing pieces 12A to 12D located below the terminal parts 13A and 13B, it is possible to form air spaces below the terminal parts 13A and 13B using the covering parts 15F and 15G.

In this way, the air space makes it more difficult for water to reach the terminal parts 13A and 13B, more effectively prevent the terminal parts 13A and 13B from submerging and more effectively protect the battery 12.

Since the battery 12 is fixed to the bracket 14 at a position upward away from the floor panel 2, it is possible to prevent vibration of the vehicle 1 from directly transmitting from the floor panel 2 to the battery 12 compared to a case where the fixing part is provided on the upper surface 2a of the floor panel 2 and protect the battery 12 from vibration.

The cover member 15 of the present embodiment has a shape that conforms to an outer diameter shape of the battery 12 and covers the battery 12 in close proximity to the battery 12. The cover member 15 can enhance rigidity of the battery 12, more effectively prevent vibration of the vehicle 1 from transmitting to the battery 12 and more effectively protect the battery 12 from vibration.

According to the protective structure for the battery 12 of the present embodiment, the notch portion 12b is formed on the front surface 12a of the battery 12 and the notch portion 12b is located below the terminal parts 13A and 13B.

In addition to this, the space portion 18 surrounded by the notch portion 12b is formed inside the cover member 15.

Thus, it is possible to form an air space of large capacity inside the cover member 15 below the terminal parts 13A and 13B. For this reason, when the battery 12 is submerged, the air space surrounded by the notch portion 12b can make it further difficult for water to reach the terminal parts 13A and 13B.

As a result, it is possible to more effectively prevent the terminal parts 13A and 13B from submerging and more effectively protect the battery 12.

Since the radiation fin 12c is formed in the notch portion 12b, the radiation fin 12c can improve heat radiation effects of the battery 12. In addition to this, since the radiation fin 12c can be installed using the space portion 18 surrounded by the notch portion 12b, it is possible to prevent the installation space of the radiation fin 12c from expanding and prevent the battery 12 from becoming large.

Note that the notch portion 12b of the present embodiment is formed on the front surface 12a of the battery 12, but the present invention is not limited to this. The notch portion 12b is only required to be formed at least one or more of the front surface 12a, the rear surface, the left rear surface and the right side surface of the battery 12. The front surface 12a, the rear surface, the left rear surface and the right side surface formed in different orientations of the battery 12 each constitute a side surface of the electric component formed in different orientations.

The terminal part of the present embodiment is constructed of the terminal parts 13A and 13B, but three or more terminal parts may be provided. Therefore, three or more wire harnesses may be routed.

Although the wire harness 22 is routed in the space portion 17 of the bulging part 16, both wire harnesses 21 and 22 may be routed in the space portion 17 of the bulging part 16.

The electric component is not limited to the battery 12 but is applicable to, for example, a DC-DC converter. However, the electric component is not limited to a battery or a DC-DC converter, but it can be any electrical part mounted on the vehicle 1.

### [Reference Signs List]

1...vehicle, 2...floor panel, 2a...upper surface (upper surface of floor panel), 2b...opening portion, 12...battery (electric component), 12A, 12B, 12C, 12D...fixing pieces (fixing part), 12a...front surface (side surface of electric component), 12b...notch portion, 13A, 13B...terminal part, 14...bracket, 14A, 14B, 14C, 14D...fixing piece (fixed part), 15...cover member, 15B...front wall (side wall of cover member), 15C...rear wall (side wall of cover member), 15D...left side wall (side wall of cover member), 15E...right side wall (side wall of cover member), 15F, 15G...covering part, 15u...bottom end portion (bottom end portion of side wall), 16...bulging part, 16a...distal end portion (distal end portion of bulging part in bulging direction), 18...space portion, 21, 22...wire harness, 23...substrate part

## Claims

1. A vehicle (1) comprising:
a floor panel (2);
an electric component (12) including a plurality of terminal parts (13A, 13B) on a side surface (12a) thereof and installed on the floor panel (2); and
a protective structure of the electric component (12), the protective structure including a cover member (15) provided on the floor panel (2) and configured to cover the electric component (12), wherein
the cover member (15) includes a side wall (15B) facing the side surface (12a) of the electric component (12), and
the side wall (15B) includes a bulging part (16) bulging from a wall surface (15a) of the side wall (15B) so as to be away from the side surface (12a) of the electric component (12), the bulging part (16) being located above a bottom end portion (15u) of the side wall (15B),
**characterized in that**
each terminal part (13A, 13B) is located at the same height position as the bulging part (16), and
an air space is formed in a space portion (17) formed by the bulging part (16).

2. The vehicle (1) according to claim 1, wherein
an opening portion (2b) is formed on the floor panel (2),
the cover member (15) includes a ceiling wall (15A), and a plurality of side walls (15B, 15C, 15D, 15E) including the side wall (15B), the side walls (15B, 15C, 15D, 15E) extending downward from the ceiling wall (15A) toward the floor panel (2),
the opening portion (2b) is covered with the cover member (15),
wire harnesses (21, 22) are connected to the terminal parts (13A, 13B), and
each of the wire harnesses (21, 22) passes through the opening portion (2b) from below the floor panel (2), each wire harness (21, 22) extending above the floor panel (2) within the cover member (15).

3. The vehicle (1) according to claim 2, wherein a distal end portion (16a) of the bulging part (16), which is farthest from the electric component (12), is located at the same height position as a portion of each terminal part (13A, 13B) at which the wire harness (21, 22) is connected.

4. The vehicle (1) according to claim 3, wherein a region of the air space in the space portion (17) formed by the bulging part (16) is expanded such that a connection part between the wire harnesses (21, 22) connected to the terminal parts (13A, 13B) is installed in the region of the air space.

5. The vehicle (1) according to any one of claims 1 to 4, wherein
the electric component (12) includes a substrate part (23) located above the terminal parts (13A, 13B), and
the bulging part (16) bulges so as to be farther away from the electric component (12) upward.

6. The vehicle (1) according to any one of claims 1 to 5, wherein
each terminal part (13A, 13B) is located above a center portion (C) of the electric component (12) in a height direction.

7. The vehicle (1) according to any one of claims 1 to 6, wherein
the floor panel (2) includes a bracket (14),
the electric component (12) includes a fixing part (12A, 12B, 12C, 12D) to fix the electric component (12) to the bracket (14),
the bracket (14) includes, at a higher position than an upper surface (2a) of the floor panel (2), a fixed part (14A, 14B, 14C, 14D) fixed to the fixing part (12A, 12B, 12C, 12D),
the cover member (15) includes a covering part (15F, 15G) that covers the fixing part (12A, 12B, 12C, 12D), and
each terminal part (13A, 13B) is located above the fixing part (12A, 12B, 12C, 12D).

8. The vehicle (1) according to any one of claims 1 to 7, wherein
the electric component (12) includes a plurality of side surfaces including the side surface (12a), at least one of the side surfaces being formed with a notch portion (12b),
the notch portion (12b) is located below each terminal part (13A, 13B), and
a space portion (18) is defined within the cover member (15), the space portion being surrounded by the notch portion (12b) .

## Patentansprüche

1. Ein Fahrzeug (1), aufweisend:
eine Bodenplatte (2);
eine elektrische Komponente (12) einschließlich einer Vielzahl von Anschlussteilen (13A, 13B) auf einer Seitenoberfläche (12a) davon und auf der Bodenplatte installiert (2); und
eine Schutzstruktur der elektrischen Komponente (12), wobei die Schutzstruktur ein Abdeckungselement (15) bereitgestellt auf der Bodenplatte (2) und konfiguriert, um die elektrische Komponente (12) abzudecken, umfasst, wobei
das Abdeckungselement (15) eine Seitenwand (15B) umfasst, die der Seitenoberfläche (12a) der elektrischen Komponente (12) zugewandt ist, und
die Seitenwand (15B) ein wulstiges Teil (16) umfasst, das sich von einer Wandoberfläche (15a) der Seitenwand (15B) vorwölbt, um von der Seitenoberfläche (12a) der elektrischen Komponente (12) entfernt zu sein, wobei das wulstige Teil (16) über einem unteren Endabschnitt (15u) der Seitenwand (15B) angeordnet ist,
**dadurch gekennzeichnet, dass**
jedes Anschlussteil (13A, 13B) an derselben Höhenposition wie das wulstige Teil (16) angeordnet ist, und
ein Luftraum in einem durch das wulstige Teil (16) ausgebildeten Raumabschnitt (17) ausgebildet ist.

2. Das Fahrzeug (1) nach Anspruch 1, wobei
ein Öffnungsabschnitt (2b) auf der Bodenplatte (2) ausgebildet ist,
das Abdeckungselement (15) eine Deckenwand (15A) und eine Vielzahl von Seitenwänden (15B, 15C, 15D, 15E) einschließlich der Seitenwand (15B), der Seitenwände (15B, 15C, 15D, 15E), die sich von der Seitenwand (15A) in Richtung der Bodenplatte (2) abwärts erstrecken, umfasst,
der Öffnungsabschnitt (2b) mit dem Abdeckungselement (15) abgedeckt ist,
Kabelbäume (21, 22) mit den Anschlussteilen (13A, 13B) verbunden sind, und
jeder der Kabelbäume (21, 22) durch den Öffnungsabschnitt (2b) unter der Bodenplatte (2) verläuft, wobei sich jeder Kabelbaum (21, 22) über der Bodenplatte (2) innerhalb des Abdeckungselements (15) erstreckt.

3. Das Fahrzeug (1) nach Anspruch 2, wobei ein distaler Endabschnitt (16a) des wulstigen Teils (16), der am weitesten von der elektrischen Komponente (12) entfernt ist, an derselben Höhenposition wie ein Abschnitt von jedem Anschlussteil (13A, 13B) angeordnet ist, an dem der Kabelbaum (21, 22) verbunden ist.

4. Das Fahrzeug (1) nach Anspruch 3, wobei ein Gebiet des Luftraums in dem Raumabschnitt (17), ausgebildet durch das wulstige Teil (16), derart ausgeweitet ist, dass ein Verbindungsteil zwischen dem Kabelbaum (21, 22), der mit den Anschlussteilen (13A, 13B) verbunden ist, in dem Gebiet des Luftraums installiert ist.

5. Das Fahrzeug (1) nach einem der Ansprüche 1 bis 4, wobei
die elektrische Komponente (12) ein über den Anschlussteilen (13A, 13B) angeordnetes Substratteil (23) umfasst, und
das wulstige Teil (16) sich so vorwölbt, um aufwärts weiter von der elektrischen Komponente (12) entfernt zu sein.

6. Das Fahrzeug (1) nach einem der Ansprüche 1 bis 5, wobei
jedes Anschlussteil (13A, 13B) über einem Mittelabschnitt (C) der elektrischen Komponente (12) in einer Höhenrichtung angeordnet ist.

7. Das Fahrzeug (1) nach einem der Ansprüche 1 bis 6, wobei
die Bodenplatte (2) eine Klammer (14) umfasst,
die elektrische Komponente (12) ein Befestigungsteil (12A, 12B, 12C, 12D) umfasst, um die elektrische Komponente (12) an der Klammer (14) zu befestigen,
die Klammer (14) an einer höheren Position als eine obere Oberfläche (2a) der Bodenplatte (2) ein befestigtes Teil (14A, 14B, 14C, 14D) umfasst, das an dem Befestigungsteil (12A, 12B, 12C, 12D) befestigt ist,
das Abdeckungselement (15) ein Abdeckungsteil (15F, 15G) umfasst, das das Befestigungsteil (12A, 12B, 12C, 12D) abdeckt, und
jedes Anschlussteil (13A, 13B) über dem Befestigungsteil (12A, 12B, 12C, 12D) angeordnet ist.

8. Das Fahrzeug (1) nach einem der Ansprüche 1 bis 7, wobei
die elektrische Komponente (12) eine Vielzahl von Seitenoberflächen einschließlich der Seitenoberfläche (12a) umfasst, wobei mindestens eine der Seitenoberflächen mit einem Kerbenabschnitt (12b) ausgebildet ist,
der Kerbenabschnitt (12b) unter jedem Anschlussteil (13A, 13B) angeordnet ist, und
ein Raumabschnitt (18) innerhalb des Abdeckungselements (15) definiert ist, wobei der Raumabschnitt durch den Kerbenabschnitt (12b) umgeben ist.

## Revendications

1. Véhicule (1) comprenant :
une tôle (2) de plancher ;
un composant (12) électrique ayant une pluralité de parties (13A, 13B) formant bornes sur sa surface (12a) latérale et montées sur la tôle (2) de plancher ; et
une structure protectrice du composant (12) électrique, la structure protectrice comprenant un élément (15) de recouvrement prévu sur la tôle (2) de plancher et configuré pour recouvrir le composant (12) électrique, dans lequel
l'élément (15) de recouvrement a une paroi (15B) latérale faisant face à la surface (12a) latérale du composant (12) électrique, et
la paroi (15B) latérale a une partie (16) bombée, en bombement d'une surface (15a) de la paroi (15B) latérale, de manière à être éloignée de la surface (12a) latérale du composant (12) électrique, la partie (16) en bombement étant disposée au-dessus d'une partie (15u) d'extrémité de fond de la paroi (15B) latérale,
**caractérisé en ce que**
chaque partie (13A, 13B) formant borne est disposée à la même position en hauteur que la partie (16) bombée, et
un espace d'air est formé dans la partie (17) d'espace formée par la partie (16) bombée.

2. Véhicule (1) suivant la revendication 1, dans lequel
une partie (2b) d'ouverture est formée sur la tôle (2) de plancher,
l'élément (15) de recouvrement a une paroi (15A) de plafond, et une pluralité de parois (15B, 15C, 15D, 15E) latérales incluant la paroi (15B) latérale, les parois (15B, 15C, 15D, 15E) latérales s'étendant vers le bas de la paroi (15A) de plafond à la tôle (2) de plancher,
la partie (2b) d'ouverture est recouverte de l'élément (15) de recouvrement,
des faisceaux (21, 22) de fils sont connectés aux parties (13A, 13B) formant bornes, et
chacun des faisceaux (21, 22) de fils par en dessous dans la partie (2b) d'ouverture de la tôle (2) de plancher, chaque faisceau (21, 22) de fils s'étendant au-dessus de la tôle (2) de plancher dans l'élément (15) de recouvrement.

3. Véhicule (1) suivant la revendication 2, dans lequel une partie (16a) d'extrémité distale de la partie (16) bombée, qui est la plus loin du composant (12) électrique, est disposée à la même position en hauteur qu'une partie de chaque partie (13A, 13B) formant borne, à laquelle le faisceau (21, 22) de fils est connecté.

4. Véhicule (1) suivant la revendication 3, dans lequel une région de l'espace d'air, dans la partie (17) d'espace formée par la partie (16) bombée, est agrandie, de manière à ce qu'une partie de connexion entre les faisceaux (21, 22) de fils connectés aux parties (13A, 13B) formant bornes soit montée dans la région de l'espace d'air.

5. Véhicule (1) suivant l'une quelconque des revendications 1 à 4, dans lequel
le composant (12) électrique a une partie (23) formant substrat disposée au-dessus des parties (13A, 13B) formant bornes, et
la partie (16) bombée est bombée de manière à s'éloigner plus vers le haut du composant (12) électrique.

6. Véhicule (1) suivant l'une quelconque des revendications 1 à 5, dans lequel
chaque partie (13A, 13B) formant borne est disposée au-dessus d'une partie (C) centrale du composant (12) électrique dans une direction en hauteur.

7. Véhicule (1) suivant l'une quelconque des revendications 1 à 6, dans lequel
la tôle (2) de plancher comprend une console (14),
le composant (12) électrique comprend une partie (12A, 12B, 12C, 12D) de fixation pour fixer le composant (12) électrique à la console (14),
la console (14) comprend, à une position plus haute qu'une surface (2a) supérieure de la tôle (2) de plancher, une partie (14A, 14B, 14C, 14D) fixe fixée à la partie (12A, 12B, 12C, 12D) de fixation,
l'élément (15) de recouvrement comprend une partie (15F, 15G) de recouvrement, qui recouvre la partie (12A, 12B, 12C, 12D) de fixation, et
chaque partie (13A, 13B) formant borne est disposée au-dessus de la partie (12A, 12B, 12C, 12D) de fixation.

8. Véhicule (1) suivant l'une quelconque des revendications 1 à 7, dans lequel
le composant (12) électrique comprend une pluralité de surfaces latérales incluant la surface (12a) latérale, au moins l'une des surfaces latérales ayant une partie (12b) d'encoche,
la partie (12b) d'encoche est disposée en-dessous de chaque partie (13A, 13B) formant borne, et
une partie (18) d'espace est définie dans l'élément (15) de recouvrement, la partie d'espace étant entourée de la partie (12b) d'encoche.
